# EUROPEAN PATENT SPECIFICATION

(11) **EP 1 811 091 B1**
(45) Date of publication and mention of the grant of the patent: **27.03.2019**
(21) Application number: 07100702.5
(22) Date of filing: 17.01.2007
(51) Int. Cl.: E03D 1/32, F16K 33/00, F16K 21/18

(54) **Sanitary apparatus**
Sanitärer Gegenstand
Appareil sanitaire

(30) Priority: 20.01.2006 GB 0601127
(43) Date of publication of application: 25.07.2007
(73) Proprietor: Fluidmaster GB Ltd, Hereford HR2 6JR (GB)
(72) Inventor: Tranter, Timothy, Hereford and Worcester HR1 3PF (GB); Davies, David, Hereford and Worcester HR6 8TT (GB)
(74) Representative: Appleyard Lees IP LLP

(56) References cited:
- CA-A- 817 688
- FR-A1- 2 557 608
- GB-A- 286 450
- US-A- 2 013 188
- US-A- 2 627 178
- US-A- 2 745 427
- US-A- 5 141 405

## Description

### Field of the Invention

The present invention relates to a sanitary apparatus with a support apparatus, to use of a support apparatus in such a sanitary apparatus and to a method of adjusting the sanitary apparatus.

### Background to the Invention

The level of a liquid and specifically water within a container may be regulated by a valve in combination with a float mechanism. Once the level of the liquid is at a specific height the float which rises with the level of the liquid is arranged to automatically close and seal the valve. For example, sanitary apparatus and more specifically toilets, comprise a tank into which water is introduced until the level of the water reaches a predetermined height. The tank comprises a filler valve which is connected to a float arm on which a float is secured. As the water rises the float rises and causes the float arm to pivot until the float arm causes the valve to close to prevent the introduction of any more water.

The water tanks may be of differing dimensions and the optimum configuration and size of the filling apparatus may not be available for the dimensions of the tank. Alternatively, the installer must have access to several filling apparatus of differing dimensions in order to select the relevant dimensions

Documents FR2557608, US2745427, and US2013188 disclose adjustable float arms for use in a toilet cistern.

It is an aim of the present invention to overcome at least one problem associated with the prior art whether referred to herein or otherwise.

### Summary of the Invention

According to the invention, a sanitary apparatus according to claim 1 is provided.

The second float arm member may be slidably movable relative to the first float arm member and may be securable to the first float arm member at a number of predetermined positions.

The second float arm member may comprise a retaining channel and the first float member may be arranged to slidably locate within the retaining channel.

The first float arm member may be secured to the second float arm member by securement means. The securement means may comprise a securement member and preferably comprise a first securement member and may comprise a first securement member and a second securement member. The or each securement member may comprise a pin.

The first float arm member and/or the second float arm member may comprise a securement aperture and preferably comprise a plurality of securement apertures.

The first float arm member may comprise more securement apertures than the second float arm member. The first float arm member may comprise a plurality and preferably comprises five securement apertures. The second float arm member may comprise two securement apertures.

According to the invention, the length of the float arm may be adjusted to at least two different lengths and preferably four different lengths.

A securement aperture of the first float arm member may be arranged, in use, to be aligned with a corresponding securement aperture of the second float arm member which may then enable a securement member to project therethrough in order to secure the first float arm member to the second float arm member. More preferably two securement apertures of the first float arm member are arranged to be aligned with two corresponding securement apertures of the second float arm member in order for two securement members to project therethrough in order to secure the first float arm member to the second float arm member.

Preferably the first float arm member and/or the second float arm member comprise a series of equally spaced apart securement apertures provided along the longitudinal length thereof.

According to the invention, the float arm comprises a first longitudinal end on which a float is securable, and the float arm comprises a second longitudinal end which is arranged to cooperate with a filling valve.

Preferably the second longitudinal end of the float valve comprises an abutment surface.

Preferably the abutment surface is arranged to co-operate with an actuator of the valve and preferably the actuator controls the flow of liquid through the valve and may allow or prevent flow therethrough.

According to a second aspect of the present invention there is provided a use of a support apparatus according to claim 5.

According to a third aspect of the present invention claim 9 provides a method of adjusting claimed sanitary apparatus.

### Brief Description of the Drawings

The preferred embodiments of the present invention will now be described, by way of example only, with reference to the drawings that follow in which:
Figure 1 is a perspective view of an embodiment of a filling valve and a support apparatus including a preferred embodiment of a float arm in a first configuration.
Figure 2 is a perspective view of an embodiment of a filling valve and a support apparatus including a preferred embodiment of a float arm in a second configuration.
Figure 3 is a perspective view of a preferred embodiment of a float arm in a first configuration.
Figure 4 is a perspective view of a preferred embodiment of a float arm in a second configuration.
Figure 5 is a perspective view of an embodiment of a filling valve and a support apparatus including a preferred embodiment of a float arm in a first configuration and including an adjustable water level mechanism.
Figure 6 is a perspective view of an embodiment of a filling valve and a support apparatus including a preferred embodiment of a float arm in a second configuration and including an adjustable water level mechanism.
Figure 7 is an exploded view of float securement apparatus.

### Description of the Preferred Embodiment

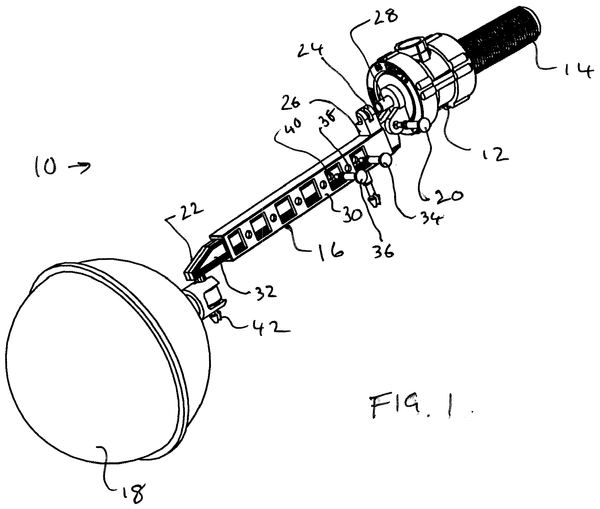

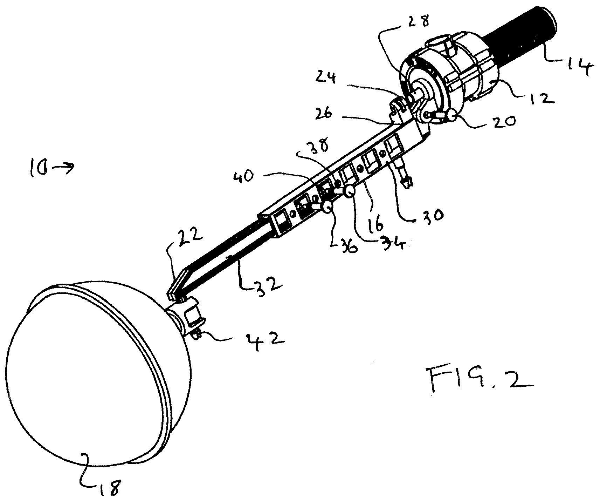

As shown in Figure 1 and Figure 2, filling apparatus 10 comprises a filling valve 12 connected to an inlet 14 and having an outlet. The flow of liquid through the filling valve 12 is controlled by a float mechanism. The float mechanism comprises a float arm 16 having a float 18 secured at one end thereof. As previously explained, the float 18 is arranged to rise as the level of liquid in a tank rises.

The float arm 16 is supported on a pivot 20 and, accordingly, as the float 18 rises the float arm 16 is arranged to pivotally move. The float 18 is supported on the first longitudinal end 22 of the float arm 16 and an abutment surface 24 is located at or towards the second longitudinal end 20 of the float arm 16. As the float arm 16 pivots, the abutment surface 24 contacts a valve actuator 28 and moves the actuator 28 in order to reduce the flow through the filling valve 12 and eventually will prevent any flow through the filling valve 12. If the level of the liquid falls below this predetermined level then the float arm 16 will pivotally move downwardly, enabling the actuator 28 to move outwardly and to therefore allow liquid to flow through the filling valve 12. The filling apparatus 10 of the present invention is particularly for use with sanitary apparatus and, more specifically, is a tank of a toilet.

The length of the float arm 16 of the present invention is adjustable and, accordingly, a single float arm 16 (or filling apparatus) can be adjusted for use with tanks of different dimensions. For example, the present invention enables the optimum length of float arm 16 to be set and adjusted. In addition, the present invention does not require any further apparatus to adjust the length of the float arm and in particular does not include extra pieces which could be lost and are difficult to secure.

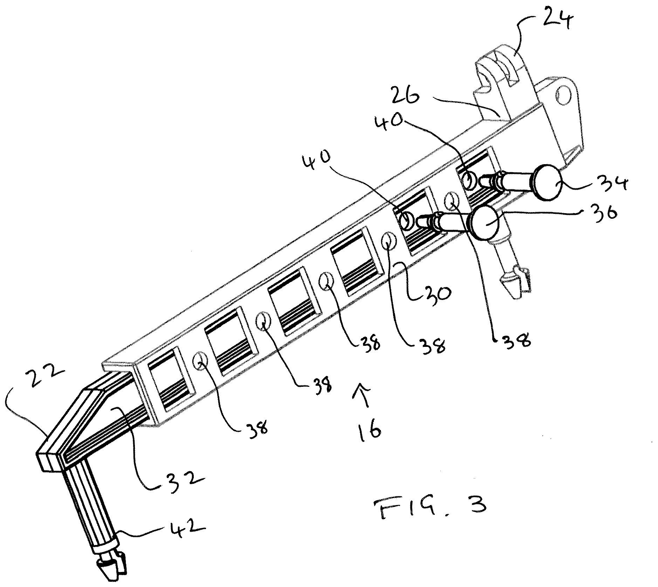

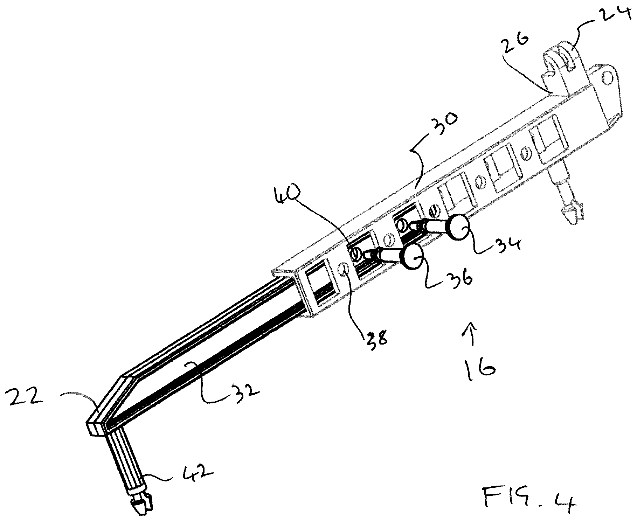

The float arm 16 comprises a first float arm member 30 and a second float arm member 32, as shown on Figures 1 to 4. The first float arm member 30 is coupled or secured to the second float arm member 32 by securement means. The securement means comprises a first securement member or pin 34 and a second securement member or pin 36. The pins 34, 36 are arranged to extend through selected securement apertures 38 in the first float arm member 30 and aligned securement apertures 40 in the second float arm member 32. The first float arm member 30 comprises a channel member providing a retaining channel. The second float arm member 32 is arranged to be retained within the retaining channel of the first float arm member 30. The second float arm member 32 is arranged to be slidably moveable relative to the first float arm member 30 within the retaining channel.

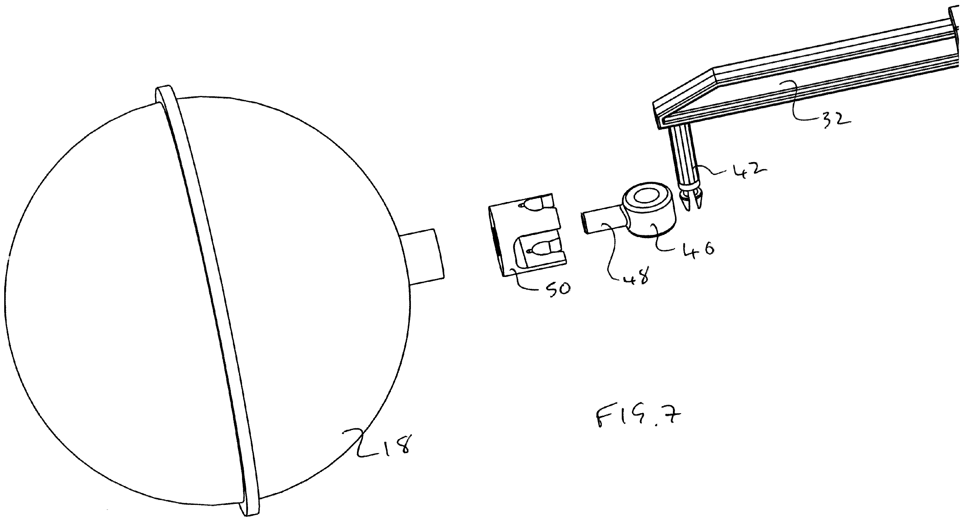

The float arm 16 comprises a first longitudinal end 22 provided by the second float arm member 32 and a second longitudinal end 26 provided by the first float arm member 30 including an aperture to support the float arm 16 on the pivot 20. The float arm comprises float engagement means 42 located at or towards the first longitudinal end. The engagement lug 42 or spigot is arranged to extend downwardly from the end of the second float arm member 32. As shown in Figure 7, the spigot is arranged to locate in an aperture provided in a clamping plate 46. The clamping plate provides a projecting portion 48 which extends through an aperture provided by a collar member 50 and is screwed into a corresponding threaded opening provided in the float 18. Accordingly, the position of the float 18 relative to the spigot 42 and hence the float arm 16 is fixed.

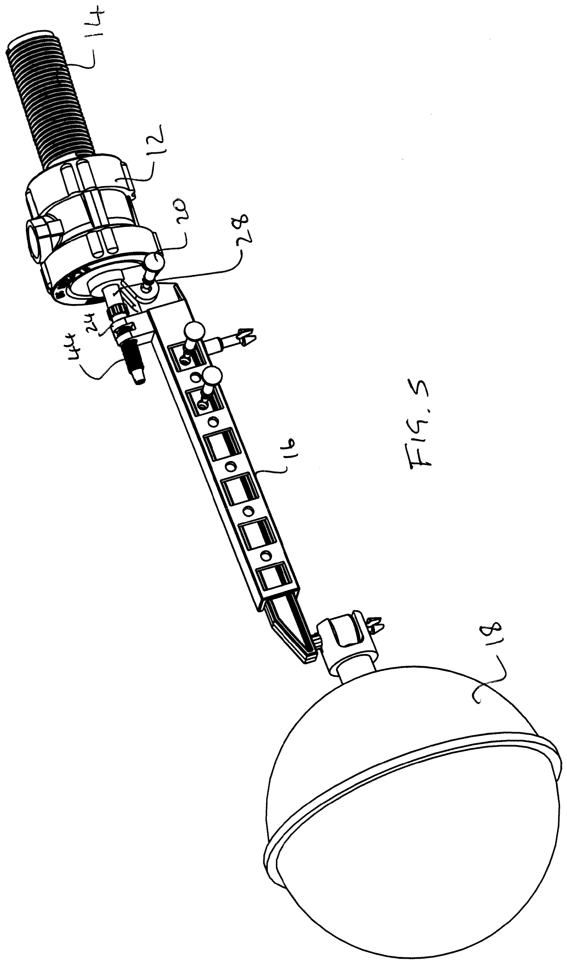

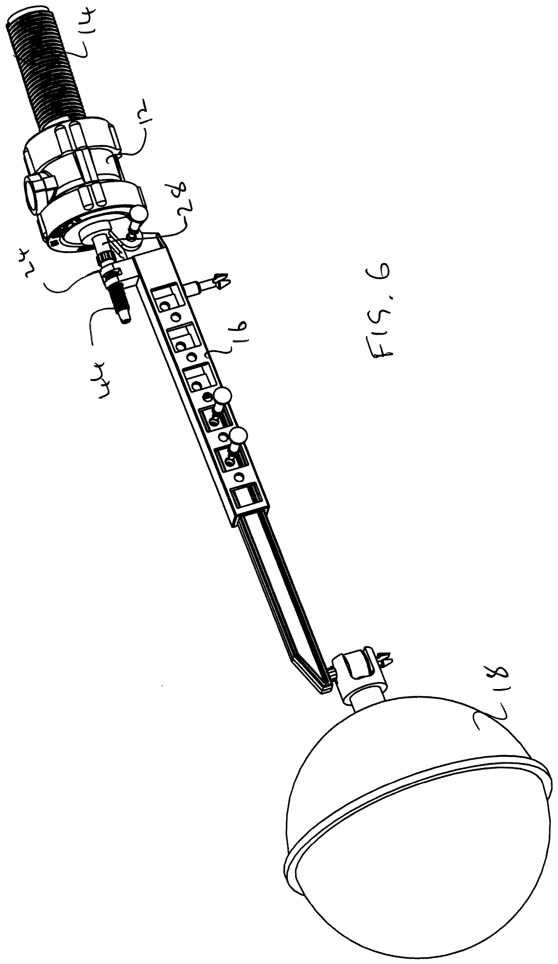

The second longitudinal end 26 of the float arm 16 comprises an abutment member 24 which is arranged to abut the actuator 28 of the filling valve 12. The abutment member 24 is provided on the first float arm member 30 and is arranged to project upwardly therefrom. In the preferred embodiment, as shown in Figure 5 and Figure 6, an adjusting screw 44 is provided which co-operates with a threaded portion in the abutment member 24. The adjusting screw 44 can be screwed into or out of the threaded portion in order to control when the actuator 28 closes the valve 12 and hence the adjusting screw 44 is able to set the water level in the tank.

In use the length of the float arm 16 can be quickly and easily adjusted by removing the pins 34, 36 from the securement apparatus 38, 40. The second float arm member 32 is then slidably moved into or out of the retaining channel of the first float arm member 30 until the correct predetermined length is achieved and the securement apertures 38, 40 are aligned. The pins 34, 36 are then inserted into the securement apertures in order for the length of the float arm 16 to be fixed and maintained at that length. Accordingly, the present invention is quick and easy as well as reliable. In addition, the present invention does not require any further apparatus or equipment which may fail or may be difficult to construct or may be lost. This also reduces the cost.

## Claims

1. A sanitary apparatus being an assembly comprising a water tank of a toilet, a filling valve (12) to fill the water tank and a support apparatus;
the support apparatus comprising a float arm (16), wherein the float arm (16) comprises a first longitudinal end (22) on which a float (18) is secured and a second longitudinal end (20) which is arranged to cooperate with the filling valve (12) to control the flow of liquid through the valve (12) and allow or prevent flow therethrough, wherein the length of the float arm (16) is adjustable whereby the float arm is telescopic and comprises at least two float arm members (30, 32) slidably movable relative to each other,
**characterised in that**
the float arm members (30, 32) are securable to each other in at least two configurations in order to provide a float arm (16) of at least two lengths.

2. A sanitary apparatus as claimed in claim 1, wherein the second float arm member (32) is slidably movable relative to the first float arm member (30) and is securable to the first float arm member at a number of predetermined positions.

3. A sanitary apparatus as claimed in either of claims 1 or 2 wherein, the first float arm member (30) is secured to the second float arm member (32) by securement means (34, 36).

4. A sanitary apparatus as claimed in claim 3, wherein a securement aperture (38) of the first float arm member (30) is arranged, in use, to be aligned with a corresponding securement (40) aperture of the second float arm member (30) which enables the securement member to project therethrough in order to secure the first float arm member to the second float arm member (32).

5. Use of a support apparatus in a water tank of a toilet, wherein the support apparatus comprises a float arm (16) comprising a first longitudinal end (22) on which a float (18) is secured and a second longitudinal end (20) which is arranged to cooperate with a filling valve (12) to control the flow of liquid through the valve (12) and allow or prevent flow therethrough and wherein the length of the float arm (16) is adjustable whereby the float arm is telescopic and comprises at least two float arm members (30, 32) slidably movable relative to each other, wherein the float arm members (30, 32) are securable to each other in at least two configurations in order to provide a float arm (16) of at least two lengths.

6. Use of the support apparatus as claimed in claim 5, wherein the second float arm member (32) is slidably movable relative to the first float arm member (30) and is securable to the first float arm member at a number of predetermined positions.

7. Use of the support apparatus as claimed in either of claims 5 or 6 wherein, the first float arm member (30) is secured to the second float arm member (32) by securement means (34, 36).

8. Use of the support apparatus as claimed in claim 7, wherein a securement aperture (38) of the first float arm member (30) is arranged, in use, to be aligned with a corresponding securement (40) aperture of the second float arm member (30) which enables the securement member to project therethrough in order to secure the first float arm member to the second float arm member (32).

9. A method of adjusting a sanitary apparatus that is in accordance with any of claims 1 to 4, the method comprising moving the first float arm member (30) relative to the second float arm member (32) and securing the first float arm member (30) to the second float arm member (32) in order to adjust the length of the float arm (16).

## Patentansprüche

1. Sanitäre Vorrichtung, die eine Anordnung ist, die einen Wassertank einer Toilette, ein Füllventil (12) zum Füllen des Wassertanks und eine Trägervorrichtung umfasst;
wobei die Trägervorrichtung einen Schwimmerarm (16) umfasst, wobei der Schwimmerarm (16) ein erstes Längsende (22), auf dem ein Schwimmer (18) befestigt ist, und ein zweites Längsende (20) umfasst, das angeordnet ist, um mit dem Füllventil (12) zusammenzuwirken, um den Flüssigkeitsstrom durch das Ventil (12) zu steuern und die Strömung dort hindurch zu ermöglichen oder zu verhindern,
wobei die Länge des Schwimmerarms (16) angepasst werden kann, wobei der Schwimmerarm teleskopisch ist und mindestens zwei Schwimmerarmelemente (30, 32) umfasst, die zueinander verschiebbar sind,
**dadurch gekennzeichnet, dass** die Schwimmerarmelemente (30, 32) in mindestens zwei Konfigurationen aneinander befestigt werden können, um einen Schwimmerarm (16) mit mindestens zwei Längen bereitzustellen.

2. Sanitäre Vorrichtung nach Anspruch 1, wobei das zweite Schwimmerarmelement (32) in Bezug zu dem ersten Schwimmerarmelement (30) verschiebbar ist und an dem ersten Schwimmerarmelement an mehreren vorgegebenen Stellen befestigt werden kann.

3. Sanitäre Vorrichtung nach Anspruch 1 oder 2, wobei das erste Schwimmerarmelement (30) mit Befestigungseinrichtungen (34, 36) an dem zweiten Schwimmerarmelement (32) befestigt ist.

4. Sanitäre Vorrichtung nach Anspruch 3, wobei eine Befestigungsöffnung (38) des ersten Schwimmerarmelements (30) angeordnet ist, um während der Verwendung an einer entsprechenden Befestigungsöffnung (40) des zweiten Schwimmerarmelements (30) ausgerichtet zu werden, wodurch dem Befestigungselement ermöglicht wird, sich dort hindurch zu erstrecken, um das erste Schwimmerarmelement an dem zweiten Schwimmerarmelement (32) zu befestigen.

5. Verwendung einer Trägervorrichtung in einem Wassertank einer Toilette, wobei die Trägervorrichtung einen Schwimmerarm (16) umfasst, der ein erstes Längsende (22), auf dem ein Schwimmer (18) befestigt ist, und ein zweites Längsende (20), umfasst, das angeordnet ist, um mit einem Füllventil (12) zusammenzuwirken, um den Flüssigkeitsstrom durch das Ventil (12) zu steuern und die Strömung dort hindurch zu ermöglichen oder zu verhindern, und wobei die Länge des Schwimmerarms (16) angepasst werden kann, wobei der Schwimmerarm teleskopisch ist und mindestens zwei Schwimmerarmelemente (30, 32) umfasst, die zueinander verschiebbar sind, wobei die Schwimmerarmelemente (30, 32) in mindestens zwei Konfigurationen aneinander befestigt werden können, um einen Schwimmerarm (16) mit mindestens zwei Längen bereitzustellen.

6. Verwendung der Trägervorrichtung nach Anspruch 5, wobei das zweite Schwimmerarmelement (32) in Bezug zu dem ersten Schwimmerarmelement (30) verschiebbar ist und an dem ersten Schwimmerarmelement an mehreren vorgegebenen Stellen befestigt werden kann.

7. Verwendung der Trägervorrichtung nach Anspruch 5 oder 6, wobei das erste Schwimmerarmelement (30) mit Befestigungseinrichtungen (34, 36) an dem zweiten Schwimmerarmelement (32) befestigt ist.

8. Verwendung der Trägervorrichtung nach Anspruch 7, wobei eine Befestigungsöffnung (38) des ersten Schwimmerarmelements (30) angeordnet ist, um während der Verwendung an einer entsprechenden Befestigungsöffnung (40) des zweiten Schwimmerarmelements (30) ausgerichtet zu werden, wodurch dem Befestigungselement ermöglicht wird, sich dort hindurch zu erstrecken, um das erste Schwimmerarmelement an dem zweiten Schwimmerarmelement (32) zu befestigen.

9. Verfahren zum Anpassen einer sanitären Vorrichtung nach einem der Ansprüche 1 bis 4, wobei das Verfahren das Bewegen des ersten Schwimmerarmelements (30) in Bezug zu dem zweiten Schwimmerarmelement (32) und das Befestigen des ersten Schwimmerarmelements (30) an dem zweiten Schwimmerarmelement (32) umfasst, um die Länge des Schwimmerarms (16) anzupassen.

## Revendications

1. Appareil sanitaire étant un ensemble comprenant un réservoir d'eau d'un WC, une vanne de remplissage (12) pour remplir le réservoir d'eau et un appareil de support ;
l'appareil de support comprenant un bras de flotteur (16), le bras de flotteur (16) comprenant une première extrémité longitudinale (22) sur laquelle est fixé un flotteur (18) et une deuxième extrémité longitudinale (20) qui est prévue pour coopérer avec la vanne de remplissage (12) pour réguler l'écoulement de liquide à travers la vanne (12) et permettre ou empêcher l'écoulement à travers elle, la longueur du bras de flotteur (16) pouvant être ajustée, le bras de flotteur étant télescopique et comprenant au moins deux organes de bras de flotteur (30, 32) déplaçables par coulissement l'un par rapport à l'autre,
**caractérisé en ce que**
les organes de bras de flotteur (30, 32) peuvent être fixés l'un à l'autre dans au moins deux configurations afin de fournir un bras de flotteur (16) ayant au moins deux longueurs.

2. Appareil sanitaire selon la revendication 1, dans lequel le deuxième organe de bras de flotteur (32) peut être déplacé par coulissement par rapport au premier organe de bras de flotteur (30) et peut être fixé au premier organe de bras de flotteur dans un certain nombre de positions prédéterminées.

3. Appareil sanitaire selon l'une ou l'autre des revendications 1 et 2, dans lequel le premier organe de bras de flotteur (30) est fixé au deuxième organe de bras de flotteur (32) par un moyen de fixation (34, 36).

4. Appareil sanitaire selon la revendication 3, dans lequel une ouverture de fixation (38) du premier organe de bras de flotteur (30) est disposée pendant l'utilisation de manière à être alignée avec une ouverture de fixation correspondante (40) du deuxième organe de bras de flotteur (30) qui permet à l'organe de fixation de faire saillie à travers elle afin de fixer le premier organe de bras de flotteur au deuxième organe de bras de flotteur (32).

5. Utilisation d'un appareil de support dans un réservoir d'eau d'un WC, l'appareil de support comprenant un bras de flotteur (16) comprenant une première extrémité longitudinale (22) sur laquelle est fixé un flotteur (18) et une deuxième extrémité longitudinale (20) qui est prévue pour coopérer avec une vanne de remplissage (12) pour réguler l'écoulement de liquide à travers la vanne (12) et permettre ou empêcher l'écoulement à travers elle, et la longueur du bras de flotteur (16) étant ajustable, le bras de flotteur étant télescopique et comprenant au moins deux organes de bras de flotteur (30, 32) déplaçables par coulissement l'un par rapport à l'autre, les organes de bras de flotteur (30, 32) pouvant être fixés l'un à l'autre dans au moins deux configurations afin de fournir un bras de flotteur (16) ayant au moins deux longueurs.

6. Utilisation de l'appareil de support selon la revendication 5, au cours de laquelle le deuxième organe de bras de flotteur (32) peut être déplacé par coulissement par rapport au premier organe de bras de flotteur (30) et peut être fixé au premier organe de bras de flotteur au niveau d'un certain nombre de positions prédéterminées.

7. Utilisation de l'appareil de support selon l'une ou l'autre des revendications 5 et 6, au cours de laquelle le premier organe de bras de flotteur (30) est fixé au deuxième organe de bras de flotteur (32) par un moyen de fixation (34, 36).

8. Utilisation de l'appareil de support selon la revendication 7, dans lequel une ouverture de fixation (38) du premier organe de bras de flotteur (30) est prévue pendant l'utilisation pour être alignée avec une ouverture de fixation correspondante (40) du deuxième organe de bras de flotteur (30) qui permet à l'organe de fixation de faire saillie à travers elle afin de fixer le premier organe de bras de flotteur au deuxième organe de bras de flotteur (32).

9. Procédé d'ajustement d'un appareil sanitaire selon l'une quelconque des revendications 1 à 4, le procédé comprenant le déplacement du premier organe de bras de flotteur (30) par rapport au deuxième organe de bras de flotteur (32) et la fixation du premier organe de bras de flotteur (30) au deuxième organe de bras de flotteur (32) afin d'ajuster la longueur du bras de flotteur (16).
